# FASCICULE DE BREVET EUROPEEN

(11) **EP 1 870 568 B1**
(45) Date de publication et mention de la délivrance du brevet: **15.12.2010**
(21) Numéro de dépôt: 07290691.0
(22) Date de dépôt: 04.06.2007
(51) Int. Cl.: F01L 1/34, F02D 13/02, F01L 1/18, F01L 1/053, F02B 17/00, F02B 29/08

(54) **Moteur à combustion interne à injection indirecte, notamment moteur suralimenté à allumage commandé avec deux moyens d'admission pour réaliser une phase de balayage de gaz brûles**
Brennkraftmaschine mit indirekter Einspritzung insbesondere aufgeladene Ottomotor mit zwei Einlasskanälen zur Realizierung einer Spülphase der Verbrennungsgase
Internal combustion engine with indirect injection, in particular a supercharged engine with controlled ignition with two intakes to provide a phase of scavenging burned gases

(30) Priorité: 19.06.2006 FR 0605576
(43) Date de publication de la demande: 26.12.2007
(73) Titulaire: IFP Energies nouvelles, 92852 Rueil-Malmaison Cedex (FR)
(72) Inventeur: Pagot, Alexandre, 92500 Rueil Malmaison (FR)

(56) Documents cités:
- FR-A1- 2 863 006
- US-A- 5 230 320
- US-B1- 6 397 813

## Description

La présente invention concerne un moteur à combustion interne à injection indirecte comportant au moins deux moyens d'admission pour réaliser une phase de balayage des gaz brûlés résiduels.

Elle concerne plus particulièrement un moteur suralimenté, notamment à allumage commandé.

Comme cela est connu, la puissance délivrée par un moteur à combustion interne est fonction de la quantité d'air introduite dans la chambre de combustion de ce moteur et cette quantité d'air est elle-même proportionnelle à la densité de cet air.

En cas de demande de forte puissance au moteur, il est prévu d'augmenter cette quantité d'air au moyen d'une compression de l'air par un dispositif de suralimentation (turbocompresseur ou un compresseur entraîné, tel qu'un compresseur à vis) avant qu'il ne soit admis dans cette chambre de combustion.

Dans le but d'augmenter cette quantité d'air comprimé admise dans le cylindre, il est prévu de réaliser une phase de balayage des gaz brûlés résiduels présents dans la chambre de combustion. Cette phase de balayage permet, avant la fin du cycle d'échappement du moteur, d'évacuer les gaz brûlés présents dans la chambre de combustion pour les remplacer par de l'air comprimé (ou air suralimenté).

Comme cela est décrit dans les brevets US 4 217 866 ou US 5 230 320, cette phase de balayage consiste à réaliser, en fin de cycle d'échappement et en début de cycle d'admission d'un même cylindre, un croisement entre les soupapes d'échappement et d'admission de ce même cylindre. Ce croisement est réalisé en ouvrant simultanément ces soupapes d'échappement et d'admission pendant quelques degrés à quelques dizaines de degrés d'angle de rotation de vilebrequin.

Dans l'exemple du moteur suralimenté à injection indirecte de carburant décrit dans ce document, il est prévu un moyen d'échappement des gaz brûlés avec une soupape d'échappement contrôlant une tubulure d'échappement et deux moyens d'admission. L'un des moyens d'admission est un moyen d'admission d'air suralimenté non carburé avec une tubulure ainsi qu'une soupape et l'autre des moyens d'admission est un moyen d'admission d'air carburé, constitué d'une tubulure portant un injecteur de carburant et d'une soupape.

Le balayage des gaz brûlés est réalisé, d'une part, grâce au croisement de la soupape d'échappement et de la soupape d'admission d'air suralimenté non carburé, la soupape d'admission d'air carburé restant fermée et, d'autre part, par le fait que la pression de l'air au niveau de la soupape d'admission ouverte est plus élevée que la pression des gaz d'échappement encore présents dans la chambre de combustion. L'air suralimenté non carburé qui est admis dans la chambre de combustion balaye ces gaz pour les évacuer au travers de la soupape d'échappement. De ce fait, de l'air suralimenté non carburé occupe le volume libéré par ces gaz d'échappement, ce qui permet une augmentation non négligeable de la quantité d'air introduite pendant le cycle d'admission du moteur. Au voisinage de la fin de la phase de balayage, la soupape d'échappement se ferme, la soupape d'admission d'air suralimenté carburé s'ouvre, l'injecteur de carburant est activé et de l'air suralimenté carburé est admis dans la chambre de combustion par l'autre moyen d'admission en complément de l'air suralimenté non carburé qui y est admis.

Ce type de moteur bien que donnant satisfaction présente néanmoins des inconvénients non négligeables.

En effet, comme mieux explicité dans le brevet US 5 230 320, lors de la phase de balayage des gaz brûlés, il est nécessaire d'utiliser un même moyen de commande des deux soupapes d'admission, comme celui connu sous le sigle de VVT (Variable Valve Timing), qui permettent de faire varier les lois de levées de ces soupapes, en particulier au niveau de leurs moments d'ouverture/fermeture.

Pour ce faire, il est prévu de disposer d'un arbre à cames avec des cames de commande qui possèdent chacune un profil très précis et qui doivent présenter l'une par rapport à l'autre un décalage angulaire qui permettent de fonctionner avec et sans phase de balayage, notamment pour le fonctionnement au ralenti du moteur.

Un tel type d'arbre à cames est délicat à réaliser et nécessite de nombreuses tentatives pour trouver les profils et décalages angulaires qui conviennent. De plus, il présente un étalement apparent qui est relativement important.

De plus, en dehors de la phase de balayage, les cames décalées pénalisent le fonctionnement du moteur, notamment son remplissage à hauts régimes. En outre, pour réaliser le décalage des cames, il est alors nécessaire d'arriver à un compromis entre le mode de fonctionnement du moteur avec phase de balayage et le mode de fonctionnement hors phase de balayage.

La présente invention se propose de remédier aux inconvénients mentionnés ci-dessus grâce à un moteur avec des dispositifs qui autorisent l'actionnement des soupapes sans utiliser de moyens de commande complexes et coûteux.

A cet effet, la présente invention concerne un moteur à combustion interne, notamment moteur suralimenté à injection indirecte, pouvant fonctionner avec une phase de balayage de gaz brûlés, comprenant au moins un cylindre comportant une chambre de combustion, une tubulure d'admission d'air avec une soupape d'admission d'air, un injecteur de carburant pour une tubulure d'admission d'air carburé avec une soupape d'admission d'air carburé, une soupape d'échappement et des moyens de commande de la soupape d'échappement, caractérisé en ce que le moteur comprend des moyens de commande pour la soupape d'admission d'air et des moyens de commande additionnels pour la soupape d'admission d'air carburé, lesdits moyens de commande additionnels étant indépendants des moyens de commande pour la soupape d'admission d'air.

Les moyens de commande additionnels peuvent comprendre des moyens d'actionnement de la soupape d'admission d'air carburé contrôlés par les moyens de commande de la de la soupape d'échappement.

Les moyens d'actionnement peuvent comprendre un basculeur actionnant la soupape d'admission d'air carburé.

Les moyens de commande de la de la soupape d'échappement peuvent comprendre un actionneur pour le basculeur.

Les moyens de commande de la de la soupape d'échappement peuvent comprendre un arbre à cames et l'arbre à cames peut comprendre une came pouvant contrôler le mouvement du basculeur.

L'arbre à cames peut comprendre une came pouvant contrôler la soupape d'échappement.

Les moyens de commande additionnels peuvent comprendre un arbre à cames.

Les moyens de commande de la soupape d'admission d'air peuvent comprendre des moyens de variation de la loi de levée de ladite soupape.

Le moteur à combustion interne peut comprendre un injecteur de carburant pour des moyens d'admission d'air comprenant une tubulure d'admission d'air avec une soupape d'admission d'air permettant d'obtenir des moyens d'admission d'air à injection de carburant contrôlée.

Le moteur à combustion interne peut également comprendre une unité de contrôle permettant d'autoriser ou d'interdire l'injection de carburant dans les moyens d'admission d'air à injection de carburant contrôlé.

Les autres caractéristiques et avantages de l'invention vont apparaître à la lecture de la description qui va suivre, donnée à titre uniquement illustratif et non limitatif, et à laquelle sont annexées :
- la figure 1 qui montre une vue partielle d'un moteur suralimenté à combustion interne selon l'invention et
- la figure 2 qui est un graphique montrant la course des soupapes d'admission et d'échappement pour le fonctionnement du moteur avec balayage de gaz brûlés (B) et pour un fonctionnement conventionnel de ce moteur (C).

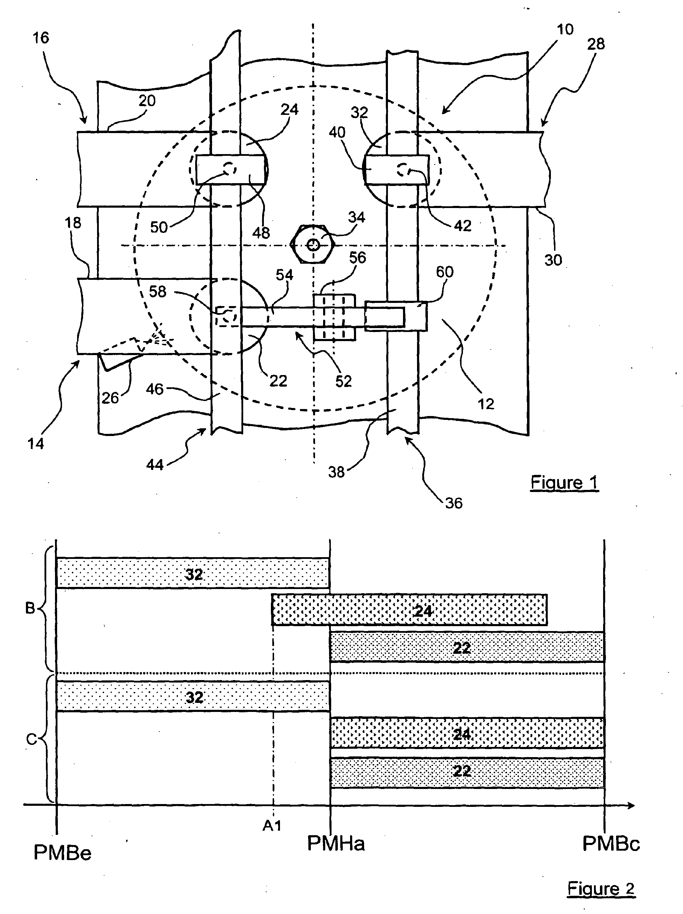

La figure 1 montre un moteur à combustion interne suralimenté, notamment de type à injection indirecte d'essence et en particulier à allumage commandé.
Ce moteur comprend au moins un cylindre 10 avec à l'intérieur duquel coulisse un piston (non représenté) dans un mouvement alternatif rectiligne entre une première position, dite point mort haut (PMH), et une autre position, dénommée point mort bas (PMB). Ce cylindre comprend une chambre de combustion 12 dans laquelle se produit la combustion d'un mélange d'air ou d'air suralimenté et de carburant ou d'air suralimenté (ou non suralimenté) additionné de gaz d'échappement recirculés (EGR) et de carburant.
Ce cylindre 10 comprend des moyens d'admission 14 d'air suralimenté carburé (ou d'air carburé) et des moyens d'admission 16 d'air suralimenté (ou d'air) qui, dans le cas de l'exemple montré, est un air non carburé.
Habituellement, ces moyens d'admission sont formés par un orifice prévu dans la culasse que comporte généralement ce moteur, une tubulure 18, 20 en communication avec cet orifice et un moyen d'obturation 22, 24 dudit orifice, tel qu'une soupape d'admission. Un moyen d'injection de carburant 26, comme un injecteur à nappes de jets, permet d'introduire un carburant dans la tubulure 18 de façon à ce qu'il se mélange avec l'air qui y circule et à former un mélange carburé qui est introduit dans la chambre de combustion. Ainsi, les moyens d'admission d'air carburé 14 comprennent la tubulure 18, la soupape 22 et l'injecteur 26 alors que les moyens d'admission d'air non carburé 16 comprennent la tubulure 20 et la soupape 24.
Ce cylindre comprend également des moyens d'échappement de gaz brûlés 28 comportant une tubulure d'échappement 30 et un moyen d'obturation, par exemple une soupape d'échappement 32.
Le cylindre comprend aussi des moyens d'allumage, tels qu'une bougie 34, permettant d'initier la combustion du mélange carburé contenu dans la chambre de combustion 12.

La soupape d'échappement 32 est commandée en déplacement en ouverture/fermeture de l'orifice prévu dans la culasse par un moyen de commande 36 comportant un arbre à cames rotatif 38, dit arbre à cames échappement, muni d'une came 40 agissant sur la tige 42 de la soupape d'échappement 32.

La soupape d'admission d'air non carburé 24 est commandée en ouverture/fermeture de l'orifice par des moyens 44 permettant de faire varier sa loi de levée, plus particulièrement au niveau de ses moments d'ouverture et de fermeture, et qui sont plus connus sous le sigle de VVT (Variable Valve Timing). Avantageusement, ces moyens de type VVT sont constitués, pour l'essentiel, d'un arbre à cames rotatif 46, dit arbre à cames admission, avec une came 48 s'appuyant sur la tige 50 de la soupape d'admission 24.
Bien entendu, ces deux arbres à cames peuvent être entraînés de manière synchronisés l'un par rapport à l'autre par tout moyen connu, comme la chaîne ou la courroie de distribution que comporte tout moteur.

Pour assurer la commande de la soupape d'admission d'air carburé 22, il est prévu de disposer de moyens de commande additionnels qui soient indépendants de l'arbre à cames admission 46.

Ces moyens additionnels peuvent être un troisième arbre à cames qui est entraîné de manière synchronisée avec l'arbre à cames admission et l'arbre à cames échappement par tout moyen connu, comme la chaîne ou la courroie de distribution telle que précédemment mentionné.

Avantageusement et comme mieux explicité dans la suite de la description, ces moyens de commande additionnels comprennent des moyens d'actionnement 52 de la soupape d'air carburé 22 qui sont contrôlés par l'arbre à cames échappement 38.

Ces moyens d'actionnement comprennent un basculeur 54 avec une barre montée à rotation sur un pivot 56 fixé sur le moteur et plus particulièrement sur la partie de la culasse située entre la soupape 22 et l'arbre à cames échappement. Ce basculeur comporte ainsi deux bras de leviers, un bras de levier entre le pivot et l'extrémité de cette barre 54 qui prend appui sur la tige 58 de la soupape 22 et un autre bras de levier entre ce même pivot et l'autre des extrémités qui s'appuie sur une came 60 portée par l'arbre à cames échappement 38.

L'arbre à cames admission 46 de type VVT est piloté par une unité de contrôle (non représentée), comme le calculateur-moteur que comporte habituellement un moteur. Ce calculateur-moteur comprend des cartographies ou des tables qui permettent, en fonction des conditions de fonctionnement de ce moteur, de réaliser ou non des phases de balayage de gaz brûlés résiduels présents dans la chambre de combustion ainsi que d'injecter le carburant à des moments déterminés et pendant des périodes choisies.

Les profils et décalages angulaires des cames 40 et 60 portées par l'arbre à cames échappement 38 ainsi que les différents bras de levier entre les extrémités de la barre 54 et le pivot 56 sont déduits par l'homme du métier de manière à ce que la soupape d'admission d'air 22 commence à s'ouvrir au voisinage de la fermeture de la soupape d'échappement 32.

Ainsi, en fonctionnement et en cas de variation de puissance requise par le moteur ou dans la configuration de fonctionnement de ce moteur selon laquelle il se trouve à bas ou à moyen régimes et à fortes charges, le moteur est alimenté en air suralimenté et une phase de balayage des gaz brûlés est réalisée avec croisement des soupapes en fin de cycle échappement et au début du cycle admission de ce moteur.
Dans ce cas, en se référant en plus à la figure 2 (Partie B), la soupape d'échappement 32 s'ouvre, de manière conventionnelle, au voisinage du PMB échappement (PMBe) et se referme au voisinage du PMH admission (PMHa) sous l'action de la came 40 portée par l'arbre à cames échappement 38. Le calculateur-moteur commande, au voisinage du PMHa, l'arbre à cames 46 de type VVT commande la soupape d'admission d'air non carburé 24 d'une manière telle que cette soupape s'ouvre précocement à un angle de vilebrequin A1 situé bien avant le PMHa et se referme avant le PMB compression (PMBc). La soupape d'admission 22 du moyen d'admission d'air suralimenté carburé 14 s'ouvre au voisinage du PMHa et se referme au voisinage du PMBc sous l'action de la came 60 portée par l'arbre à came échappement 38.

Ainsi, entre l'angle A1 et le PMHa, les soupapes d'admission d'air non carburé 24 et d'échappement 32 sont ouvertes alors que la soupape d'admission d'air carburé 22 est fermée. Dans cette configuration, la pression de l'air d'admission suralimenté non carburé au niveau de la soupape d'admission 24 est supérieure à la pression des gaz d'échappement résiduels présents dans la chambre de combustion au niveau de la soupape d'échappement 32. Il se crée donc un différentiel de pressions entre la pression de l'air suralimenté et la pression des gaz d'échappement résiduels. Ce différentiel permet le balayage des gaz brûlés présents dans la chambre 12 qui, sous l'effet de ce différentiel, sont expulsés hors de cette chambre au travers de la soupape d'échappement 32.
Ceci permet donc le balayage des gaz brûlés résiduels présents dans la chambre de combustion 12 et le remplacement de ceux-ci par de l'air suralimenté dépourvu de carburant.
Dès que la phase de balayage des gaz brûlés est terminée au voisinage du PMHa, la soupape d'échappement 32 se ferme sous l'effet de la came 40, la soupape d'admission 24 reste ouverte et la soupape d'admission d'air suralimenté carburé 22 s'ouvre sous l'action du basculeur 54 qui pivote autour de l'axe 56 sous l'action de son extrémité qui s'appuie sur la came 60. Simultanément, le calculateur-moteur commande l'activation de l'injecteur 26 de façon à introduire du carburant dans la tubulure 18 et à obtenir un mélange carburé qui est amené dans la chambre de combustion 12. Par la suite, ce mélange carburé sera comprimé puis allumé par la bougie 34 de façon à obtenir une combustion de ce mélange suivie d'une détente.

De façon à améliorer l'introduction d'air carburé dans cette chambre de combustion, il peut être prévu d'injecter du carburant dans la tubulure d'admission 18 en avance par rapport au cycle. Ceci se réalise alors que la soupape d'admission 22 est encore fermée et avant que la soupape d'échappement 32 se ferme. Ainsi, la tubulure d'admission 18 contient un mélange carburé au préalable de l'ouverture de la soupape d'admission 22. Ce mélange est introduit dans la chambre de combustion à la fermeture de cette soupape d'échappement et à l'ouverture de la soupape d'admission d'air carburé.

En cas de fonctionnement conventionnel du moteur, comme cela se produit en marche au ralenti, le moteur est alimenté en air à pression ambiante et ne nécessite pas de phase de balayage de gaz brûlés.
Dans cette configuration, l'arbre à cames admission 46 fonctionne comme un arbre à cames classique sans décalage en avance de l'ouverture de la soupape d'admission d'air 24.

Comme illustré par la partie C de la figure 2, au voisinage du PMHa, la soupape d'échappement 32 se ferme, les soupapes d'admission 22 et 24 s'ouvrent au moment de la fermeture de la soupape d'échappement. Comme précédemment décrit, le calculateur-moteur commande l'activation de l'injecteur 26 pour injecter du carburant dans la tubulure 18 et obtenir un mélange carburé dans la chambre de combustion 12.

Préférentiellement, l'injection de carburant se réalise dans la tubulure d'admission 18 avec une quantité telle qu'elle permet d'obtenir, dans la chambre de combustion, un mélange carburé avec une richesse voisine de 1.

Grâce à l'invention il est laissé toute latitude quant à la loi de levée de la soupape d'admission d'air non carburé 24 et/ou à sa commande et cela sans pénaliser le fonctionnement de la soupape d'admission d'air carburé 22.
Ainsi, il peut être prévu que la soupape d'air non carburé 24 se ferme à la fin de la phase de balayage des gaz brûlés au voisinage du PMHa. Dans ce cas, le moteur fonctionnera comme un moteur à deux soupapes 22 et 32 à la fin de cette phase de balayage.
En outre, il peut être prévu que l'arbre à cames admission 46 soit débrayable. Ceci permet de le rendre inopérationnel pendant le fonctionnement conventionnel du moteur qui fonctionnera également dans ce cas comme un moteur conventionnel à deux soupapes.

La présente invention n'est pas limitée à l'exemple décrit mais englobe toutes variantes et tous équivalents, tels que décrits dans les revendications.
Notamment, dans la description qui précède, il est fait mention de moyens d'admission d'air non carburé qui permettent d'introduire un air non carburé dans la chambre de combustion lors de la phase de balayage.
Il peut être envisagé d'utiliser des moyens d'admission spécifiques, dits moyens d'admission à injection de carburant contrôlé, permettant d'introduire dans la chambre de combustion un air suralimenté (ou un air) qui peut être soit un air suralimenté carburé (ou un air carburé), soit un air suralimenté non carburé. Ceci se réalise par un injecteur de carburant placé dans la tubulure d'admission 20 et qui est commandé par le calculateur-moteur pour pouvoir injecter du carburant dans cette tubulure 20 en dehors des phases de balayage des gaz brûlés, comme cela est mieux décrit dans la demande de brevet français N° 05/ 05 237 du demandeur.
Ainsi pendant la phase de balayage de gaz brûlés, comme précédemment décrit, il est réalisé un croisement des soupapes d'admission 24 et d'échappement 32. Pendant ce croisement de soupapes, le calculateur-moteur commande l'injecteur des moyens d'admission 16 de façon à ce qu'il ne soit pas actif. Dès que la phase de balayage des gaz brûlés est terminée, la soupape d'échappement 32 est fermée, la soupape d'admission 24 des moyens d'admission à injection de carburant contrôlé 16 reste ouverte et la soupape d'admission 22 du moyen d'admission d'air carburé 14 s'ouvre. Simultanément, le calculateur-moteur commande en activation l'injecteur 26 de façon à ce que du carburant soit injecté dans la tubulure 18 et un mélange carburé est introduit dans la chambre de combustion 12.
En cas de fonctionnement conventionnel du moteur, c'est-à-dire en mode d'admission sans balayage de gaz brûlés, la soupape d'échappement 32 se ferme, la soupape d'admission 22 des moyens d'admission d'air carburé 14 ainsi que la soupape d'admission 24 des moyens d'admission à injection de carburant contrôlé 14 s'ouvrent au moment de la fermeture de la soupape d'échappement. Simultanément, le calculateur-moteur commande l'activation des deux injecteurs de carburant pour injecter du carburant dans les tubulures 18 et 20 et pour obtenir un mélange carburé dans chacune des tubulures.

## Revendications

1. Moteur à combustion interne, notamment moteur suralimenté à injection indirecte, pouvant fonctionner avec une phase de balayage de gaz brûlés, comprenant au moins un cylindre (10) comportant une chambre de combustion (12), une tubulure d'admission d'air (20) avec une soupape d'admission d'air (24), un injecteur de carburant (26) pour une tubulure d'admission d'air carburé (18) avec une soupape d'admission d'air carburé (22), une soupape d'échappement (32) et des moyens de commande (36) de la soupape d'échappement (32), **caractérisé en ce que** le moteur comprend des moyens de commande (44) pour la soupape d'admission d'air (24) et des moyens de commande additionnels pour une soupape d'admission d'air carburé (22), lesdits moyens de commande additionnels étant indépendants des moyens de commande (44) pour la soupape d'admission d'air (24).

2. Moteur à combustion interne selon la revendication 1, **caractérisé en ce que** lesdits moyens de commande additionnels comprennent des moyens d'actionnement (52) de la soupape d'admission d'air carburé (22) contrôlés par les moyens de commande (36) de la soupape d'échappement (32).

3. Moteur à combustion interne selon la revendication 2, **caractérisé en ce que** les moyens d'actionnement (52) comprennent un basculeur (54) actionnant la soupape d'admission d'air carburé (22).

4. Moteur à combustion interne selon l'une des revendications 1 à 3, **caractérisé en ce que** les moyens de commande (36) de la soupape d'échappement (32) comprennent un actionneur (60) pour le basculeur (54).

5. Moteur à combustion interne selon l'une des revendications précédentes, **caractérisé en ce que** les moyens de commande (36) de la soupape d'échappement (32) comprennent un arbre à cames (38) et **en ce que** l'arbre à cames comprend une came (60) contrôlant le mouvement du basculeur (54).

6. Moteur à combustion interne selon la revendication 5, **caractérisé en ce que** l'arbre à cames (38) comprend une came (40) contrôlant la soupape d'échappement (32).

7. Moteur à combustion interne selon la revendication 1, **caractérisé en ce que** lesdits moyens de commande additionnels comprennent un arbre à cames.

8. Moteur à combustion interne suralimenté selon la revendication 1, **caractérisé en ce que** les moyens de commande (44) de la soupape d'admission d'air (24) comprennent des moyens de variation de la loi de levée de ladite soupape..

9. Moteur à combustion interne selon la revendication 1, **caractérisé en ce qu'**il comprend un injecteur de carburant pour des moyens d'admission d'air (16) comprenant une tubulure d'admission d'air (20) avec une soupape d'admission d'air (24) permettant d'obtenir des moyens d'admission d'air à injection de carburant contrôlée.

10. Moteur à combustion interne selon la revendication 9, **caractérisé en ce qu'**il comprend une unité de contrôle permettant d'autoriser ou d'interdire l'injection de carburant dans les moyens d'admission d'air à injection de carburant contrôlé.

## Claims

1. An internal combustion engine, notably an indirect-injection supercharged engine, which can function with a burnt gas scavenging stage, including at least one cylinder (10) including a combustion chamber (12), an air intake tube (20) with an air intake valve (24), a fuel injector (26) for a carbureted air intake tube (18) with a carbureted air intake valve (22), an exhaust valve (32) and means (36) for controlling the exhaust valve (32), **characterised in that** the engine includes control means (44) for the air intake valve (24) and additional control means for a carbureted air intake valve (22), said additional control means being independent of the control means (44) for the air intake valve (24).

2. The internal combustion engine according to claim 1, **characterised in that** said additional control means include means (52) for actuating the carbureted air intake valve (22), which are controlled by means (36) for controlling the exhaust valve (32).

3. The internal combustion engine according to claim 2, **characterised in that** the actuating means (52) include a rocker arm (54) that actuates the carbureted air intake valve (22).

4. The internal combustion engine according to one of claims 1 to 3, **characterised in that** means (36) for controlling the exhaust valve (32) include an actuator (60) for the rocker arm (54).

5. The internal combustion engine according to one of the preceding claims, **characterised in that** the means (36) for controlling the exhaust valve (32) include a camshaft (38) and **in that** the camshaft includes a cam (60) that controls the movement of the rocker arm (54).

6. The internal combustion engine according to claim 5, **characterised in that** the camshaft (38) includes a cam (40) that controls the exhaust valve (32).

7. The internal combustion engine according to claim 1, **characterised in that** said additional control means comprise a camshaft.

8. The supercharged internal combustion engine according to claim 1, **characterised in that** the means (44) for controlling the air intake valve (24) include means for varying the lift law of said valve.

9. The internal combustion engine according to claim 1, **characterised in that** it includes a fuel injector for air intake means (16) including an air intake tube (20) with an air intake valve (24) which makes it possible to obtain controlled fuel-injection air intake means.

10. The internal combustion engine according to claim 9, **characterised in that** it includes a control unit which makes it possible to permit or prevent the injection of fuel into the controlled fuel-injection air intake means.

## Patentansprüche

1. Brennkraftmaschine, insbesondere aufgeladener Motor mit indirekter Einspritzung, der mit einer Spülphase der verbrannten Gase betrieben werden kann, umfassend mindestens einen Zylinder (10) mit einem Brennraum (12), eine Luftansaugleitung (20) mit einem Lufteinlassventil (24), eine Kraftstoffdüse (26) für eine Kraftstoff-Luft-Gemisch-Ansaugleitung (18) mit einem Kraftstoff-Luft-Gemisch-Einlassventil (22), ein Auslassventil (32) und Steuermittel (36) des Auslassventils (32), **dadurch gekennzeichnet, dass** der Motor Steuermittel (44) für das Lufteinlassventil (24) und zusätzliche Steuermittel für ein Kraftstoff-Luft-Gemisch-Einlassventil (22) umfasst, wobei diese zusätzlichen Steuermittel von den Steuermitteln (44) für das Lufteinlassventil (24) unabhängig sind.

2. Brennkraftmaschine nach Anspruch 1, **dadurch gekennzeichnet, dass** die zusätzlichen Steuermittel Betätigungsmittel (52) des Kraftstoff-Luft-Gemisch-Einlassventils (22) umfassen, die von den Steuermitteln (36) des Auslassventils (32) gesteuert werden.

3. Brennkraftmaschine nach Anspruch 2, **dadurch gekennzeichnet, dass** die Betätigungsmittel (52) einen Kipphebel (54) umfassen, der das Kraftstoff-Luft-Gemisch-Einlassventil (22) betätigt.

4. Brennkraftmaschine nach einem der Ansprüche 1 bis 3, **dadurch gekennzeichnet, dass** die Steuermittel (36) des Auslassventils (32) ein Stellglied (60) für den Kipphebel (54) umfassen.

5. Brennkraftmaschine nach einem der vorherigen Ansprüche, **dadurch gekennzeichnet, dass** die Steuermittel (36) des Auslassventils (32) eine Nockenwelle (38) umfassen, und **dadurch**, dass die Nockenwelle einen Nocken (60) umfasst, der die Bewegung des Kipphebels (54) steuert.

6. Brennkraftmaschine nach Anspruch 5, **dadurch gekennzeichnet, dass** die Nockenwelle (38) einen Nocken (40) umfasst, der das Auslassventil (32) steuert.

7. Brennkraftmaschine nach Anspruch 1, **dadurch gekennzeichnet, dass** die zusätzlichen Steuermittel eine Nockenwelle umfassen.

8. Aufladbare Brennkraftmaschine nach Anspruch 1, **dadurch gekennzeichnet, dass** die Steuermittel (44) des Lufteinlassventils (24) Mittel zum Variieren des Hubgesetzes dieses Ventils umfassen.

9. Brennkraftmaschine nach Anspruch 1, **dadurch gekennzeichnet, dass** sie eine Kraftstoffdüse für Lufteinlassmittel (16) aufweist, umfassend eine Luftansaugleitung (20) mit einem Lufteinlassventil (24), die es erlaubt, Lufteinlassmittel mit geregelter Kraftstoffeinspritzung zu erhalten.

10. Brennkraftmaschine nach Anspruch 9, **dadurch gekennzeichnet, dass** sie eine Steuereinheit umfasst, die es erlaubt, die Kraftstoffeinspritzung in die Lufteinlassmittel mit geregelter Kraftstoffeinspritzung zuzulassen oder zu untersagen.
